# EUROPÄISCHE PATENTANMELDUNG

(11) **EP 0 595 026 A1**
(43) Veröffentlichungstag der Anmeldung: **04.05.1994**
(21) Anmeldenummer: 93115394.4
(22) Anmeldetag: 24.09.1993
(51) Int. Cl.: F02C 6/00

(54) **Verfahren für eine Mehrstufenverbrennung in Gasturbinen**

(30) Priorität: 26.10.1992 DE 4236071
(71) Anmelder: ABB RESEARCH LTD., CH-8050 Zürich 11 (CH)
(72) Erfinder: Keller, Jakob, Prof.Dr., Redmond, Washington 98052 (US)
(74) Vertreter: Hetzer, Hans Jürgen

(57) **Zusammenfassung**

Bei einem Verfahren für eine Mehrstufenverbrennung in Gasturbinen wird die hochdruckseitige Brennkammer (8) in eine unterstöchiometrische Stufe (17) und in eine überstöchiometrische Stufe (18) aufgeteilt. Die Heissgase aus den beiden Verbrennungsstufen beaufschlagen eine HD-Turbine (10). Danach werden die Abgase aus der genannten Turbine (10) in einer ihr nachgeschalteten niederdruckseitigen Brennkammer (11) einer nochmaligen kalorischen Aufbereitung unterzogen. Anschliessend beaufschlagen diese Heissgase eine ND-Turbine (13). Weil der gesamte Brennstoff auf eine überstöchiometrisch betriebene und auf eine unterstöchiometrisch betriebene Verbrennstufe auf dem höchsten Niveau verteilt wird, besteht die Gefahr einer Bildung von NOX-Emissionen nicht.

## Beschreibung

### Technisches Gebiet

Die vorliegende Erfindung betrifft ein Verfahren für eine Mehrstufenverbrennung in Gasturbinen gemäss Oberbegriff des Anspruchs 1.

### Stand der Technik

Eine besonders perfekte Reaktionsstufe in Feuerungsanlagen, die bei atmosphärischem Druck betrieben werden, wird dadurch erreicht, dass den Brenngasen im Anschluss an eine unterstöchiometrische Vormischverbrennungsstufe mit eventuell nachgeschalteter Reaktionsstufe zur Reaktion von brennstoffgebundenem Stickstoff, beispielsweise bei Brennstoffen, die aus luftgeblasenen Kohlevergasungsanlagen stammen, noch im unterstöchiometrischen Bereich auf geeignete Weise Wärme entzogen wird. Die abgeführte Wärmeleistung wird in der Regel so bemessen, dass nach der Restluftzufuhr eine Grenztemperatur von ca. 1400°C nicht überschritten wird, wobei die Grenztemperatur um so höher sein darf, je kürzer die Aufenthaltszeit in der heissesten Primärzone ist.

Im Zusammenhang mit der Entwicklung von Brennkammern der neueren Generation wurde ein Nachbrennsystem entwickelt, welches zum Ziel hat, im Anschluss an eine erste "Lean-Premix"-Verbrennungsstufe weiteren Brennstoff zuzuführen, ohne dabei eine kritische Grenztemperatur zu überschreiten. Bei der Nachbrenntechnik, die sich grundlegend von einer konventionellen Vormischverbrennungstechnik unterscheidet, weil dort keine Flammenstabilisierung erfolgt, ist zum einen eine sehr schnelle Einmischung des Brennstoffes erforderlich. Dies bedeutet, beispielsweise bei Erdgasen, dass der Brennstoff zusammen mit einer nennenswerten Luftmenge, also etwa 10% der Gesamtluft, oder zusammen mit einem Abgasstrom in den Nachbrenner eingeblasen werden muss, damit eine ausreichend rasche und intensive Mischung mit den heissen Brenngasen aus der Primärstufe erreicht wird. Zum anderen soll die Luft oder ein Abgasstrom den Brennstoff vor sofortiger Zündung abschirmen.

### Darstellung der Erfindung

Der Erfindung, wie sie in den Ansprüchen gekennzeichnet ist, liegt die Aufgabe zugrunde, bei einem Verfahren der eingangs genannten Art eine Klasse von Verbrennungsprozessen vorzuschlagen, die auf einer Kombination von Vormischverbrennungsprozessen, überstöchometrisch, unterstöchiometrisch oder eine Kombination von beiden, basieren, dies auf dem höchsten Druckniveau einer zwei- oder mehrstufigen Gasturbine mit Nachbrennprozessen sowie auf einem oder mehreren mittleren Druckniveaux.

Die wesentlichen Vorteile der Erfindung sind hierbei darin zu sehen, dass die Wärmezuführ nach der Primärverbrennung mit einem Nachbrenner erfolgt. Des weiteren darin, dass der Wärmeentzug durch die Turbinenstufe geschieht, der im Rahmen der ganzen Prozessführung den Wärmeentzug durch ein Wärmetauschelement teilweise oder ganz ersetzt. Von Vorteil ist es, dass das Element "Turbine" genau wie das Element "Wärmetauscher" den über- oder unterstöchiometrischen Gasen eine bestimmte Wärmemenge entzieht. Auf diese Weise geleingt es:
- Die Schadstoff-Emissionen niedrig zu halten,
- die für den Nachbrenner erforderliche Kühlluft klein zu halten,
- eine sehr einfache Konstruktion zu finden,
- thermomechanische Unwegbarkeiten zu vermeiden,
- die Produktionskosten pro KW niedrig zu halten.

Ein weiterer Vorteil der Erfindung ergibt sich daraus, einen Teil der Kühlluft, der zur Kühlung von Turbinenschaufeln oder der Welle verwendet wird, anschliessend dem Nachbrenner zuzuführen. Damit kann die Entnahme von Luft von einem Zwischendruckniveau des Verdichters begrenzt und der Prozess weiter verbessert werden.

Vorteilhafte und zweckmässige Weiterbildungen der erfindungsgemässen Aufgabenlösung sind in den weiteren Ansprüchen gekennzeichnet.

Im folgenden werden anhand der Zeichnungen Ausführungsbeispiele der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnungen

Es zeigt:
- Fig. 1: eine Gasturbogruppe, im wesntlichen bestehend aus einer Verdichtergruppe, einer Turbinengruppe und einer dazwischengeschalteten Brennkammer,
- Fig. 2: eine weitere Gasturbogruppe, ähnlich Fig. 1, wobei die HD-Turbine zwei Turbinenpfade aufweist und
- Fig. 3: eine weitere Gasturbogruppe, ähnlich Fig. 1, welche mit einer sogenannten "Schleuderturbine" ergänzt ist.

### Wege zur Ausführung der Erfindung, gewerbliche Verwertbarkeit

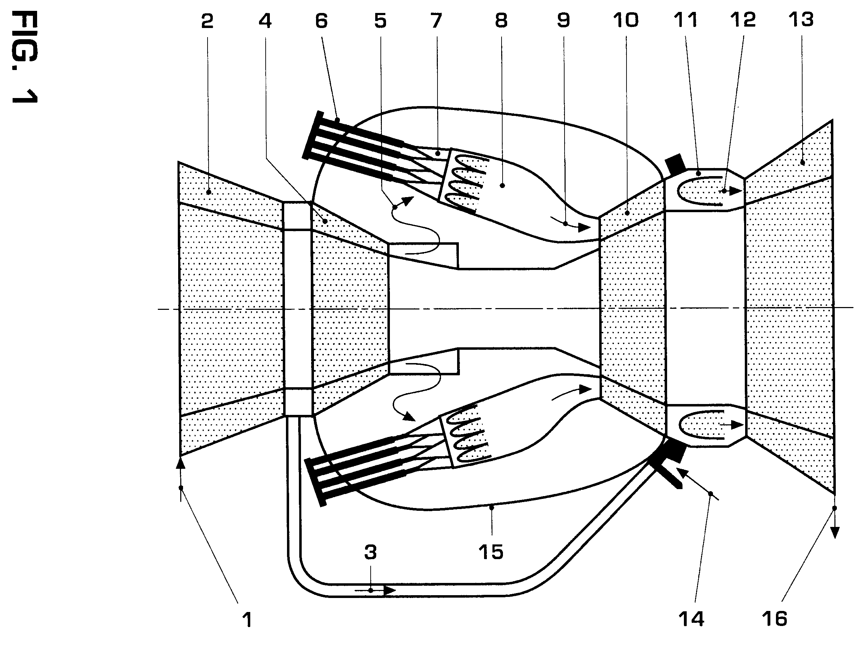

Fig. 1 zeigt eine Gasturbogruppe, welche aus einer Verdichtergruppe, einer Brennkammer und einer Turbinengruppe besteht. Die angesaugte Luft 1 wird in einem ersten Verdichter 2 vorverdichtet. Ein Teil dieser Luft wird am Ende dieser Verdichtung abgezweigt und zur niederdruckseitigen Brennkammer 11 geführt. Der restliche Teil der verdichteten Luft wird anschliessend in einem zweiten Verdichtet 4 fertig verdichtet und anschliessend als verdichtete Verbrennungsluft 5 einer hochdruckseitigen Brennkammer 8 zugeführt. Im vorliegenden Fall ist diese Brennkammer 8 eine Ringbrennkammer, welche mit einer Anzahl Brenner 7 betrieben wird. Vorzugsweise sind hier Vormischbrenner gemäss EP-0 321 809 einzusetzen. Brennstofflanzen 6 für die Speisung der einzelnen Vormischbrenner erstrecken sich ausserhalb des Luftgehäuses 15. Die Heissgase 9 beaufschlagen zunächst eine HD-Turbine 10, anschliessend durchlaufen die Abgase eine niederdruckseitige Brennkammer 11, welche die Form eines ringförmigen Rohres hat. Durch eine weitere Brennstoffzuführung 14 erfahren diese Abgase eine neuerliche kalorische Aufbereitung, womit sie als Heissgase 12 die nachfolgende Turbine, eine ND-Turbine 13, beaufschlagen. Die Abgase 16 abströmungsseitig der ND-Turbine 13 können dann anderweitig ausgenutzt werden, beispielsweise als kalorische Grundträger einer Kombianlage. Auf dem obersten Niveau dieser Gasturbogruppe, also vor der HD-Turbine 10, findet eine Lean-Premix-Verbrennung, vorzugsweise mit den genannten Vormischbrennern 7, statt. Im Anschluss an die Entspannung und die damit verbundene Abkühlung der Abgase führt ein kleiner in der Fig. nicht ersichtlicher Abgasdiffusor in die bereits erwähnte ringförmige niederdruckseitige Brennkammer 11 über, in welcher vor Einsetzung der Verbrennung eine Gasgeschwindigkeit von etwa 100 m/s vorherrscht. Die vom Verdichter 2 abgezweigte Luftmenge 3, ca. 10% der vom Verdichter 2 angesaugte Luft 1, wird von einem mittleren Verdichterdruckniveau entnommen und zunächst zur Kühlung der Wand der niederuckseitigen Brennkammer 11 eingesetzt. Anschliessend wird diese Luft dieser Brennkammer 11 zugeführt. Sie dient einerseits dazu, die Brennstoffeindüsung 14 gegen eine sofortige Zündung durch die umgebenden heissen Abgase aus der HD-Turbine 10 abzuschirmen. Damit wird eine partielle Vormischung in der Brennkammer 11 erreicht. Anderseits erhält der Brennstoff 14 damit den hohen Eindüsungsimpuls, der für die rasche Einmischung und die schnelle zweiten Verbrennung erforderlich ist. Im Anschluss an die Brennkammer 11 folgt unmittelbar die ND-Turbine 13. Auf diese Weise gelingt es
- die Schadstoff-Emissionen niedrig zu halten,
- die für die Verbrennung in der niederuckseitigen Brennkammer erforderliche Kühlluft klein zu halten,
- eine sehr einfache Konstruktion zu finden,
- thermomechanische Unwegbarkeiten zu vermeiden,
- die Produktionskosten pro KW niedrig zu halten.
Selbstverständlich ist es auch möglich, einen Teil der Kühlluft, der zur Kühlung von Turbinenschaufel und/oder der Welle verwendet wird, anschliessend der niederdruckseitigen Brennkammer 11 zuzuführen. Damit wird erreicht, dass die Entnahme von Luft von einem Zwischendruckniveau des Verdichters 2 begrenzt werden kann und der Prozess weiter verbessert wird.

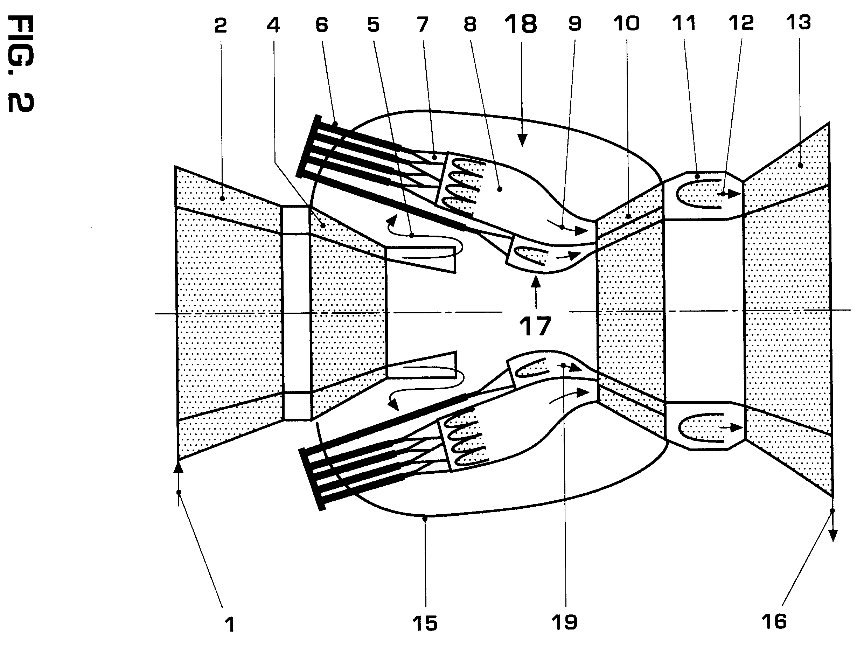

Die gemäss Fig. 2 gezeigte Möglichkeit besteht darin, für den Hochdruckteil der Turbine 10 zwei Turbinenpfade vorzusehen, wobei auf einem Pfad 17 unterstöchiometrische Gase entspannt werden, die aus einer unterstöchiometrischen Vormischverbrennung, auch hier vorzugsweise mit Brennern gemäss EP-0 321 809, auf dem höchsten Druckniveau stammen. Auf dem zweiten Pfad 18 werden Gase entspannt, die aus einer überstöchiometrischen Vormischverbrennung auf dem höchsten Druckniveau stammen. Die Temperaturbegrenzung der überstöchiometrischen Vormischverbrennung 18 ergibt sich bei vorgegebenem Druck aus der Aufenthaltszeit, die ursächlich für die NOx-Bildung verantwortlich ist. Eine weitere Temperaturbegrenzungsforderung folgt aus der thermischen Grenzbeanspruchung der Turbinenbeschaufelung. Die Temperaturbegrenzung der unterstöchiometrischen Vormischverbrennung 17 steht hingegen nur mit der Turbinengrenztemperatur im Zusammenhang. Die Frage der NOx-Bildung im unterstöchiometriscchen Gemisch führt kaum zu einer Temperaturbegrenzungsforderung. Der gesamte Brennstoff wird also auf eine überstöchiometrisch betriebene 8 und auf eine unterstöchiometrisch betriebene Brennkammer auf dem höchsten Druckniveau verteilt. Nach erfolgter Entspannung in der HD-Turbine 10 werden die beiden Gemische in der niederuckseitigen Brennkammer 11 ganz oder teilweise zusammengeführt und damit erneut zur Reaktion gebracht. Die HD-Turbinenstufe, die von den unterstöchiometrischen Heissgasen durchströmt wird, kann auch als LBTU-Brennstofferzeuger für die niederuckseitigen Brennkammer 11 betrachtet werden. Die Gase haben nur noch einen sehr geringen Heizwert, was die NOx-Bildung in der niederdruckseitigen Brennkammer 11 begrenzt, und bilden einen wesentlichen Anteil am Gesamtmassenstrom durch die Brennkammer 11, was die rasche Einmischung und die weitere Verbrennung ermöglicht. Ein wichtiger Freiheitsgrad dieser Technik ergibt sich aus der Möglichkeit heraus, die unterstöchiometrische Brennkammer 19 mit der Luft zu kühlen, die anschliessend der überstöchiometrischen Brennkammer 8 zugeführt wird. Ausserdem kann damit die Kühltechnik radikal vereinfacht werden. Im Exstremfall lässt sich auf diese Weise ein Abgasstrom soweit abkühlen, dass eine stöchiometrische Teilverbrennung möglich wird. Stöchiometrische Heissgase könnten dann zur Abschirmung der Reaktion zwischen unter- und überstöchiometrischen Heissgasen eingesetzt werden. In diesem Fall wäre sogar eine Entspannung beider Heissgase in der gleichen HD-Turbinenstufe möglich, wobei an eine radiale Trennung mit in der Figur nicht ersichtlichen Zwischendeckbändern auf den Laufschaufeln oder an eine Trennung in Umfangsrichtung gedacht werden kann. Je nach Grösse der gesamten Maschine ist es möglich, den vergleichweise kleinen unterstöchiometrischen Heissgasstrom in der Brennkammer 19 über eine hier nicht dargestellte und wahlweise ungekühlte Radialturbine zu entspannen. Es gilt hier zu beachten, dass der Einblasung von Kühlluft in die unterstöchiometrische HD-Turbinenstufe wegen der Kühlluft in der Turbine Grenzen gesetzt sind.

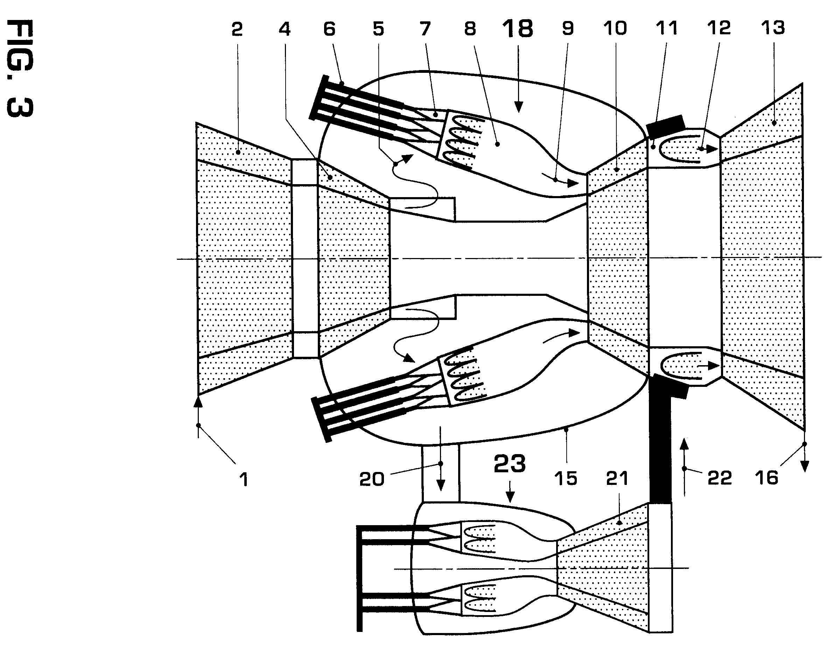

Fig. 3 zeigt eine Möglichkeit, die nach Fig. 2 erwähnte Radialturbine als Schleuderturbine 21 vorzusehen, welche zur Abscheidung feinster Partikeln in einer PFBC-Anlage dienen könnte. Damit ist es möglich, die Idee der luftgeblasenen Kohlevergasung mit der Idee der PFBC zu kombinieren. Aus dem Luftgehäuse 15 wird ein Teil Luft 20 abgezweigt und zu einer an sich autonome unterstöchiometrischen Verbrennung 23 zugeführt. Die hier zum Einsatz gelangenden Brenner entsprechen den Vormischbrennern der Hauptstufe. Auch hier wird vorzugsweise eine Ringbrennkammer vorgesehen. In der unterstöchiometrischen arbeitenden Schleuderturbine 21 werden zunächst Partikeln bis zu sehr kleinen Grössen, etwa kleiner oder gleich ein Micrometer im Durchmesser, abgeschieden. Wenn die Eintrittstemperatur in diese Turbine etwa 800°C nicht wesentlich übersteigt, dann bleiben die Alkaliverbindungen an die Partikeln gebunden und können mit der Schleuderturbine 21 herausgeholt werden. Das damit gereinigte LBTU-Gas 22, das aus der Schleuderturbine 21 austritt, wird, allenfalls nach weiteren Reinigungsschritten, dem niederuckseitigen Verbrennungsprozess bei hohen Temperaturen zugeführt. Ein sehr wichtiger Freiheitsgrad dieser Verbrennungsprozesse besteht darin, dass auch überstöchiometrische Heissgase (Siehe Fig. 2a) beim Eintritt in die HD-Turbine nicht vollständig ausreagiert haben müssen. Beispielsweise wären hohe CO-Anteile in der HD-Turbine 10 durchaus kein Problem, weil diese Gase ja sowieso einer niederdruckseitigen Verbrennung 11 zugeführt werden. Damit können die Hauptbrennkammern praktisch auf die Primärzonen begrenzt werden. Diese Tatsache führt zu einer sehr einfachen Bauweise und zur Einsparung von Kühlluft.

### Bezeichnungsliste

- 1: Ansaugluft
- 2: 1. Verdichter
- 3: Luft zur niederdruckseitigen Brennkammer
- 4: 2. Verdichter
- 5: Verdichtete Luft
- 6: Brennstofflanzen
- 7: Vormischbrenner
- 8: Hochdruckseitige Brennkammer
- 9: Heissgase
- 10: HD-Turbine
- 11: Niederdruckseitige Brennkammer
- 12: Heissgase
- 13: ND-Turbine
- 14: Brennstoff, Brennstoffzuführung
- 15: Luftgehäuse
- 16: Abgase
- 17: Unterstöchiometrische Verbrennung
- 18: Ueberstöchiometrische Verbrennung
- 19: Unterstöchiometrische Brennkammer
- 20: Luft zur unterstöchiometrischen Verbrennung
- 21: Schleuderturbine
- 22: LBTU-Brennstoff für die niederdruckseitige BK
- 23: Unterstöchiometrische Brennkammer

## Patentansprüche

1. Verfahren für eine Mehrstufenverbrennung in Gasturbinen, bei welchen nach der Kompressionsstufe eine erste Verbrennungsstufe folgt, deren Heissgase eine erste Turbine beaufschlagen, und wobei die Abgase aus dieser ersten Turbine in einer ihr nachgeschalteten zweiten Verbrennungsstufe erneut zu Heissgasen aufbereitet werden, welche anschliessend eine zweite Turbine beaufschlagen, dadurch gekennzeichnet, dass die erste Verbrennungsstufe in eine unterstöchiometrische Verbrennung (17, 23) und in eine überstöchiometrische Verbrennung (18) aufgeteilt wird, dass mindestens die Heissgase (9) aus der überstöchiometrischen Verbrennung (18) der ersten Turbine (10) zugeführt werden.

2. Verfahren nach Anspruch 1, dadurch gekennzeichnet, dass die Heissgase aus der unterstöchiometrischen Verbrennung (17) und der überstöchiometrischen Verbrennung (18) der ersten Turbine (10) zugeführt werden.

3. Verfahren nach Anspruch 2, dadurch gekennzeichnet, dass die Heissgase aus der unterstöchiometrischen Verbrennung (17) und der überstöchiometrischen Verbrennung (18) der ersten Turbine (10) über parallele Pfade zugeführt werden.

4. Verfahren nach Anspruch 1, dadurch gekennzeichnet, dass die Heissgase aus der unterstöchiometrischen Verbrennung (23) der zweiten Verbrennungsstufe (11) zugeführt werden.

5. Verfahren nach Anspruch 4, dadurch gekennzeichnet, dass die Heissgase aus der unterstöchiometrischen Verbrennung (23) vorgängig ihrer Einleitung in die zweite Verbrennungsstufe (11) durch eine Turbine (21) strömen.

6. Verfahren nach Anspruch 5, dadurch gekennzeichnet, dass die Heissgase aus der unterstöchiometrischen Verbrennung (23) vorgängig ihrer Einleitung in die zweite Verbrennungsstufe (11) eine Schleuderturbine durchströmen.

7. Verfahren nach Anspruch 1, dadurch gekennzeichnet, dass die Heissgase aus der ersten Verbrennungsstufe mittels einer Vormischverbrennung (7) bereitgestellt werden, dass die Heissgase aus der zweiten Verbrennungsstufe mittels Selbstzündung eines dort eingedüsten Brennstoffes (14, 22) bereitgestellt werden.

8. Verfahren nach einem der Ansprüche 1-7, dadurch gekennzeichnet, dass die Kühlung einer oder mehrerer Verfahrensstufen, parallel oder in Serie, stromab der Verdichterstufe mit einem Luftstrom (3) aus einem Verdichter (2, 4) durchgeführt wird.
